# EUROPÄISCHE PATENTANMELDUNG

(11) **EP 4 349 748 A1**
(43) Veröffentlichungstag der Anmeldung: **10.04.2024**
(21) Anmeldenummer: 22200362.6
(22) Anmeldetag: 07.10.2022
(51) Int. Cl.: B65G 59/10

(54) **VORRICHTUNG UND VERFAHREN ZUR VEREINZELUNG VON GESTAPELTEN OBJEKTEN**

(71) Anmelder: Rychiger AG, 3613 Steffisburg (CH)
(72) Erfinder: DELLSPERGER, René, 3612 Steffisburg (CH); BÜHLER, Lorenz, 3110 Münsingen (CH)
(74) Vertreter: Keller Schneider Patent- und Markenanwälte AG

(57) **Zusammenfassung**

Eine Vorrichtung zum Vereinzeln eines Stapels (1) von Objekten, insbesondere von becherartigen Kapseln (1.1 - 1.n), insbesondere mit einem umlaufenden Rand, umfasst Trennelemente (2.1, 2.7), um zwischen benachbarte Objekte (1.1, 1.2) des Stapels (1) von Objekten einzugreifen. Eine Mehrzahl dieser Trennelemente (2.1 - 2.12) ist mit Eingriff in den Stapel (1) um den Stapel (1) herum angeordnet, und die Trennelemente (2.1 - 2.12) der Mehrzahl sind radial beweglich gelagert. Die Trennelemente (2.1 - 2.12) der Mehrzahl sind einzeln federnd gelagert (3.1 - 3.12), und die Vorrichtung umfasst einen Mechanismus (5, 11.1, 11.2) zur Bewegung der Trennelemente (2.1 - 2.12) der Mehrzahl nach aussen, in eine Position ohne Eingriff in den Stapel (1). Die Vorrichtung ermöglicht das automatische Vereinzeln von gestapelten Objekten, die zwar fragil sind, allerdings gleichzeitig fest ineinanderstecken und dabei noch Unregelmässigkeiten bezüglich ihrer Ausrichtung innerhalb des Stapels aufweisen.

## Beschreibung

### Technisches Gebiet

Die Erfindung betrifft eine Vorrichtung und ein Verfahren zum Vereinzeln eines Stapels von Objekten, insbesondere von becherartigen Kapseln, insbesondere mit einem umlaufenden Rand, wobei Trennelemente vorhanden sind, um zwischen benachbarte Objekte des Stapels von Objekten einzugreifen. Eine Mehrzahl dieser Trennelemente sind um den Stapel herum angeordnet und radial beweglich gelagert.

### Stand der Technik

Ein solches Vereinzeln ist insbesondere in Herstellungs- und Verarbeitungsprozessen notwendig, z. B. dann, wenn Objekte eines bestimmten Typs zwar gestapelt gelagert bzw. zwischgengelagert werden, allerdings Verarbeitungsschritte durchgeführt werden sollen, bei denen diese Objekte einzeln vorliegen müssen. Dies kann z.B. das automatische Befüllen von becherartigen Kapseln sein, die nach ihrer Herstellung zunächst in Stapeln vorliegen. In einer Fertigungstrasse ist es dabei notwendig, dass die Vereinzelung möglichst zuverlässig, schnell, kostengünstig und wartungsarm passiert. Dies wiederum macht Lösungen erforderlich, bei denen auf komplizierte Steuerungsmechanismen oder Sensorik verzichtet werden kann.

Es gibt bereits Verfahren und Vorrichtung zur Vereinzelung von gestapelten Objekten. Die europäische Patentanmeldung EP 2 799 350 A1 (ES Plastic GmbH) offenbart beispielsweise eine Vorrichtung zum Entstapeln von ineinander gestapelten Schalen, die mit einem insbesondere umlaufenden Rand ausgestattet sind, mit mindestens einem Schacht zur Aufnahme eines Schalenstapels mit einem unteren beweglichen Separiermesser, das zwischen einer geschlossenen Position, in der es den Schacht entnahmeseitig abschliesst, und einer geöffneten Position, in der die untere zu entnehmende Schale frei gegeben ist, sowie vice versa bewegbar angeordnet ist. Zusätzlich umfasst die Erfindung bewegliche Trennmesser, die in die Lücken zwischen den Schalen treten können und damit während des Trennvorgangs den Stapel im Schacht festhalten, dabei die unterste Schale aber freigeben.

Ausserdem umfasst die Vorrichtung eine angetriebene, bewegliche Saugvorrichtung mit mindestens einem Saugelement zur Anlage an die zu entnehmende Schale. Dies erlaubt es, eine Schale an der Saugvorrichtung zu fixieren.

Ein Nachteil dieser Vorrichtung zeigt sich, wenn ein Stapel von Objekten vereinzelt werden soll, bei dem zwischen den einzelnen Objekten des Stapels, um den Umfang des Stapels herum, unregelmässige Lückengrössen vorhanden sind, z.B. durch, bezogen auf die Stapelachse, schräg sitzende Objekte im Stapel. In diesem Fall besteht die Gefahr, dass die Trennmesser auf eine Lücke zwischen den Objekten stossen, die nicht gross genug ist, damit das jeweilige Trennmesser dort eintreten kann. Es kann dann passieren, dass ein Trennmesser, ungeachtet einer zu kleinen Lückengrösse, seine dem Stapel zugewandte Endposition einnimmt und damit die Objekte des Stapels beschädigt, z.B. zerdrückt. Alternativ könnte in dem Fall auch das Trennmesser beschädigt, oder der Stapel nicht effektiv vereinzelt werden.

Die CN 111874643 A (Zhejiang Wie Chi Light Ind Machinery Co Ltd) offenbart eine Trennvorrichtung für gestapelte schalenförmige Dosen. Diese umfasst bogenförmige Messer, die in eine Lücke zwischen der untersten und der zu ihr benachbarten Dose eindringen können. Zur Abtrennung bewegen sich dann kleinere Trennmesser, die in die bogenförmigen Messer integriert sind, nach unten und drücken die unterste Dose so vom Stapel weg. Der restliche Stapel wird dabei von den bogenförmigen Messern gehalten.

Auch hier funktioniert der Trennvorgang der gestapelten Dosen nur dann, wenn die Lücken zwischen den Dosen ein Eingreifen der bogenförmigen Messer in den Stapel erlauben.

Die CN 207 121210 U (Shanghai Maike Machinery Co Ltd) offenbart eine automatische Becherzuführungsvorrichtung zum einzelnen Entnehmen von gestapelten Pappbechern. Diese umfasst eine Führung zum Lagern und halten des Becherstapels, wobei die Führung ein Becherzuführungsloch beinhaltet, durch welches die zu entnehmenden Becher bei der Entnahme treten. Ferner umfasst es eine Mehrzahl von flexiblen Laschen, die in das Becherzuführungsloch hineinragen. Diese Laschen können sich so verformen, dass ein Becher durch das Becherzuführungsloch hindurchfällt, wobei sie in ihrer entspannten Form allerdings die gestapelten Becher am Hindurchfallen hindern. Ein Becherhalter unter dem Becherzuführungsloch kann mithilfe eines Unterdrucks einen Becher fixieren und vom Stapel abziehen. Bei diesem Vorgang verformen sich die Laschen am Becherzuführungsloch genug, um diesen Becher hindurchzulassen, kehren aber schnell genug in ihre entspannte Form zurück, um den restlichen Stapel aufzuhalten.

Der Nachteil dieser Vorrichtung ist, dass die flexiblen Laschen sich zwar genug verformen müssen um einen Becher bei der Entnahme hindurchzulassen, gleichzeitig mit ihrer Federkraft aber den Rest des Stapels am Hindurchtreten hindern sollen. Sollte der zu entnehmende Becher so stark mit dem ihm benachbarten Becher verkeilt sein, dass zu ihrer Trennung eine grössere Kraft als die Federkraft der Laschen benötigt wird, dann kann die Vorrichtung diese Becher nicht effektiv voneinander trennen.

### Darstellung der Erfindung

Aufgabe der Erfindung ist es, eine dem eingangs genannten technischen Gebiet zugehörende Vorrichtung und ein Verfahren zu schaffen, die ein effektives Vereinzeln von gestapelten Objekten, insbesondere becherartiger Kapseln, auch bei Schrägstellungen der Objekte bezogen auf die Stapelachse erlauben, ohne dass die Objekte dabei beschädigt werden, wobei die Vorrichtung einfach und kostengünstig aufgebaut ist.

Die Lösung der Aufgabe ist durch die Merkmale der Ansprüche 1 und 12 definiert. Bei der erfindungsgemässen Vorrichtung sind die Trennelemente der Mehrzahl einzeln federnd gelagert, und die Vorrichtung umfasst einen Mechanismus zur Bewegung der Trennelemente nach aussen, in eine Position ohne Eingriff in den Stapel.

Ein Stapel bezeichnet dabei eine Menge von gleichartigen Objekten, die entlang einer Stapelachse einander berührend angeordnet sind, insbesondere auch ineinandergesteckt. Das bedeutet, dass kein Objekt des Stapels mehr einzeln entlang der Stapelachse bewegt werden kann, ohne andere Stapelobjekte mitzubewegen, ausser es handelt sich um ein endseitiges Objekt des Stapels, welches entlang der Stapelachse vom Stapel wegbewegt werden kann. Eine Vereinzelung bezeichnet dabei das Ablösen eines Stapelobjekts vom Stapel.

Die Objekte können beispielsweise offene Kapseln sein, die mit ihren becherartigen Körpern ineinandergesteckt wurden. Das Verfahren ist insbesondere zur Vereinzelung von becherartigen Kapseln aus einem Faserwerkstoff geeignet, die sich zwar gut stapeln lassen, aber auf Grund ihrer Fragilität bei einer Vereinzelung leicht beschädigt werden können.

Weist das Objekt einen umlaufenden Rand auf, so handelt es sich dabei um eine flache herausstehende Auswölbung am Objekt, die von allen Bereichen des Objekts am weitesten von der Stapelachse entfernt ist.

Die Trennelemente sind Bauteile, die eine geeignete Form haben, um bei einem Stapel der zu vereinzelnden Objekte in eine Lücke zwischen zwei Objekte des Stapels einzugreifen. Dabei ist im Eingriffsbereich ihre Ausdehnung in Richtung der Stapelachse so gewählt, dass sie kleiner ist als die Lückengrösse zwischen den Objekten des Stapels, solange diese Objekte bezogen auf die Stapelachse nicht schräg stehen. Mit Lückengrösse ist dabei die in Richtung der Stapelachse kleinste Ausdehnung des Raums gemeint, in den die Trennelemente eintreten müssen, um zwischen zwei Objekte des Stapels einzugreifen.

Unter Eingreifen ist hier zu verstehen, dass mindestens ein Teil des entsprechenden Trennelements sich, bezogen auf die Stapelachse, zwischen Teilen von zwei benachbarten Objekten des Stapels befindet, d.h. ein Teil des Trennelements sich näher an der Stapelachse befindet, als die Objektteile, ober- und unterhalb des Trennelements, die am weitesten von der Stapelachse entfernt sind und der Stapel in keine Richtung entlang der Stapelachse frei bewegbar ist, ohne dass diese Objektteile das Trennelement berühren.

Mit einer Mehrzahl von Trennelementen ist die Gesamtheit einer Anzahl von mehr als einem Trennelement gemeint, also mindestens zwei Trennelemente, insbesondere auch mehr als zwei Trennelemente.

Als Eingriff in den Stapel wird dabei derjenige Zustand bezeichnet, bei dem alle Trennelemente der Mehrzahl jeweils in den Stapel eingreifen, oder an ihm anliegen.

Die Anordnung der Mehrzahl der Trennelemente um den Stapel herum ist derart, dass ein Stapel von Objekten so positioniert werden kann, dass diejenigen Trennelemente der Mehrzahl, die gleichzeitig in den Stapel eingreifen, zwischen dieselben zwei Objekte des Stapels eingreifen.

Ein Eingriff in den Stapel durch die Mehrzahl der Trennelemente zwischen einem endseitigen Objekt des Stapels und seinem nächsten Nachbarn, ermöglicht dabei, dass das aussenseitige Objekt durch einen geeigneten Vorgang entlang der Stapelachse vom Stapel wegbewegt werden kann, während der Rest des Stapels von einem oder mehreren Trennelementen daran gehindert wird, diesem Objekt zu folgen, sei es durch Fallen, oder aufgrund des Anhaftens an diesem Objekt.

Die bewegliche Lagerung der Trennelemente lässt die Trennelemente verschiedene radiale Positionen in Relation zum Stapel einnehmen. Dabei können die Trennelemente der Mehrzahl sowohl eine Position einnehmen, bei der sie in den Stapel eingreifen, oder an ihm anliegen, als auch eine, bei der sie dies nicht tun und den gesamten Stapel somit nicht an Bewegungen entlang der Stapelachse hindern.

Die einzeln gefederte Lagerung drückt das jeweilige Trennelement in Richtung der Position, bei der es, bei vorhandenem Stapel und geeigneter Stapelposition, zwischen zwei benachbarte Objekte des Stapels in den Stapel eingreift, solange der Mechanismus zur Bewegung der Trennelemente nach aussen nicht aktiv ist. Sollte ein Trennelement an einem Ort auf den Stapel treffen, an dem keine ausreichend grosse Lücke zwischen den Objekten vorhanden ist um dort einzugreifen, ist die Federkraft so gewählt, dass es am Stapel anliegt, ohne die Objekte zu beschädigen.

Des Weiteren umfasst die Vorrichtung einen Mechanismus zur Bewegung der Trennelemente der Mehrzahl, innerhalb ihres Bewegungsspielraums nach aussen, in eine Position ohne Eingriff in den Stapel. Bei Aktivierung des Mechanismus werden die Trennelemente der Mehrzahl entgegen der Federkraft ihrer gefederten Lagerung, vom Stapel weg nach aussen bewegt. Der Mechanismus ist ausserdem in der Lage, die Trennelemente für die Dauer seiner Aktivierung in der Position ohne Eingriff in den Stapel zu halten. Eine Deaktivierung des Mechanismus unterstellt die Trennelemente wieder der Federkraft ihrer gefederten Lagerung und sie greifen, bei vorhandenem Stapel, in den Stapel ein, oder liegen an ihm an.

Dieser Mechanismus ermöglicht es, den Stapel vor jeder Vereinzelung relativ zu den Trennelementen geeignet zu positionieren. Dabei können Trennelemente und Stapel so ausgerichtet werden, dass bei Deaktivierung des Mechanismus die Federkraft die Trennelemente in Richtung der Lücke zwischen dem nun vom Stapel zu trennenden und dem nächsten benachbarten Objekt des Stapels drückt. Beispielsweise kann eine Ausführung gewählt werden, bei der der Stapel bei Aktivierung des Mechanismus auf einen Träger fällt und danach die Lücke zwischen dem nächsten zu vereinzelnden Objekt und seines Nachbarn genau auf Höhe der Trennelemente liegt.

Vorteil der dargelegten Vorrichtung ist es, dass die einzeln selektiv gefederten Trennelemente auch ohne kontrollierte Ansteuerung jeweils nur in den Stapel eingreifen, wenn das jeweilige Trennelement eine ausreichend grosse Lücke zwischen den zu trennenden Objekten vorfindet. So kann erreicht werden, dass bei jedem Vereinzelungsvorgang genügend Trennelemente in den Stapel eingreifen, um ein Objekt des Stapels vom Stapel abzutrennen, selbst wenn die Lücke zwischen dem zu vereinzelnden Objekt und einem benachbarten Objekt eine entlang des Stapelumfangs unregelmässige Grösse aufweist. Dabei liegen die restlichen Trennelemente am Stapel an, ohne die Objekte des Stapels zu beschädigen oder selber beschädigt zu werden und ohne den Vereinzelungsvorgang zu stören. Ausserdem können die Trennelemente und ihre gefederte Lagerung bei Bedarf so angeordnet werden, dass die Federkraft, zumindest hauptsächlich, nicht in Richtung der Stapelachse verläuft. Dadurch wird eine Kraftkomponente, die parallel zur Stapelachse verläuft und auf die Trennelemente wirkt, die Trennelemente nicht von der Position mit Eingriff in den Stapel zur Position ohne Eingriff zwingen.

Bevorzugt sind die Trennelemente derart federnd gelagert, dass sie radial nach innen gegen den Stapel gedrückt werden. Dies bedeutet, dass die Trennelemente auf einer geraden Linie in Richtung der Stapelachse gedrückt werden. Insbesondere liegen diese Linien für alle Trennelemente im Wesentlichen in derselben Ebene senkrecht zur Stapelachse. Es sind aber auch Ausführungsformen möglich, bei denen die radiale Bewegung entlang einer zur Stapelachse geneigten Linie erfolgt oder bei denen die Trennelemente entlang einer gebogenen Bahn mit einer radialen Bewegungskomponente bewegt werden.

Diese Ausführung hat den Vorteil, dass die Trennelemente in ihrem Bewegungsspielraum jeweils einen, bei gleichbleibender Form der Trennelemente, vergleichsweise kleinen Raumbereich um den Stapel abdecken und damit individuell auch in eine enge Lücke zwischen den Objekten eingreifen können.

Alternativ wird die radiale Bewegung der Trennelemente durch eine Schwenkbewegung um eine Achse ausserhalb des Stapels erreicht, z.B. ein Schwenken um eine zur Stapelachse parallel verlaufende Achse.

In einer bevorzugten Ausführung der Erfindung umfasst die Mehrzahl der Trennelemente mindestens drei, insbesondere mindestens vier Trennelemente, wobei ein maximaler Winkelabstand benachbarter Trennelemente kleiner ist als 180°, d. h. entlang des Umfangs liegt kein zusammenhängender Winkelbereich ohne Trennelement vor, der eine Ausdehnung von 180° oder mehr aufweist.

So wird insbesondere bei Objekten, die selber bezogen auf die Stapelachse symmetrisch sind, sichergestellt, dass unabhängig von ihrer Stellung im Stapel stets ausreichend viele Trennelemente in den Stapel eingreifen.

Vorzugsweise ist bei der Vorrichtung eine Führung vorhanden, innerhalb derer sich der Stapel der zu vereinzelnden Objekte befinden kann. Dadurch wird eine ungewollte, nicht entlang der Stapelachse verlaufende Bewegung des Stapels verhindert.

Alternativ kann auf eine solche Führung verzichtet werden. Dies kann allerdings je nach Beschaffenheit der zu trennenden Objekte dazu führen, dass der Stapel störanfällig wird und unkontrolliert auseinanderfällt.

Die Führung kann aus einem Rohr bestehen, dessen Innendurchmesser so gewählt ist, dass der Stapel in das Rohr passt, falls die Stapelachse und die Symmetrieachse des Rohres übereinstimmen. Alternativ können auch z. B. mehrere parallel zur Stapelachse verlaufende Stangen um den Stapel herum so angeordnet werden, dass sie den Stapel von Objekten führen.

Bevorzugt ist die Mehrzahl von Trennelementen an einem Ende einer, wie oben beschriebenen, Führung angeordnet, wobei mit Ende ein in Richtung der Stapelachse endseitiger Teil der Führung gemeint ist.

Dies hat den Vorteil, dass die Trennelemente den Stapel innerhalb der Führung halten können, während das zu vereinzelnde Objekt von einem anderen Bauteil gegriffen werden kann, ohne dass die Führung dabei den Platz für dieses Bauteil limitiert.

Alternativ können die Trennelemente auch durch Aussparungen innerhalb der Führung hindurchreichen. Allerdings müssten dann eventuell auch weitere Bauteile, wie ein Aufbau zum Greifen des zu vereinzelnden Objekts, konstruktionstechnisch die Ausdehnung der Führung berücksichtigen.

In einer bevorzugten Ausführung der Erfindung beinhaltet der Mechanismus zum Bewegen der Trennelemente eine Hülse, durch deren Bewegung entlang der Stapelachse die Trennelemente der Mehrzahl radial bewegt werden. Dabei drückt diese Hülse durch ihre Ausformung, je nach Position entlang der Stapelachse, auf die gefederte Lagerung der Trennelemente der Mehrzahl und kann diese entgegen ihrer Federrichtung am Eingreifen in den Stapel hindern.

Alternativ wäre auch beispielsweise eine Mehrzahl von pneumatisch aus- und einfahrbaren Hebeln möglich, die ab einer gewissen Ausfahrstufe individuell jeweils gegen ein Verbindungselement der Trennelemente drücken. Dies wäre allerdings ein komplizierterer Aufbau.

Bevorzugterweise ist die Mehrzahl der Trennelemente quer zu einer Stapelachse, kreisförmig um den Stapel herum und radial ausgerichtet angeordnet.

Mit kreisförmig ist gemeint, dass die Trennelemente der Mehrzahl sich auf dem Umfang eines Kreises befinden, dessen Radius quer zur Stapelachse verläuft und dessen Mittelpunkt auf der Stapelachse liegt, solange alle Trennelemente dieselbe Position innerhalb ihres jeweiligen Bewegungsspielraums einnehmen.

Der Radius dieses Kreises ist wiederum so gewählt, dass die Trennelemente innerhalb ihres weiter oben beschriebenen Bewegungsspielraums die, auch weiter oben beschriebenen, Positionen einnehmen können.

Alternativ können die Trennelemente z.B. auch auf zueinander unterschiedlicher Höhe, bezogen auf die Stapelachse, angeordnet sein und dann in verschiedenen Winkeln, bezogen auf eine Gerade, die quer zur Stapelachse liegt und die Stapelachse kreuzt, in den Stapel eingreifen. Dies ist allerdings komplizierter zu lösen.

Radial ausgerichtet meint wiederum, dass alle Trennelemente der Mehrzahl, bezogen auf die Stapelachse gleich ausgerichtet sind, solange sie jeweils den selben Abstand zur Stapelachse haben. Besonders bevorzugt ist die Mehrzahl der Trennelemente gleichmässig auf den Kreisumfang, den sie mit ihrer Anordnung beschreiben, verteilt.

Bevorzugter Weise ist die Erfindung derart realisiert, dass ein vom Stapel abzuziehendes Objekt mithilfe eines, entlang der Stapelachse beweglichen, Trägers, temporär fixierbar ist. Dies ermöglicht das Abziehen eines Stapelobjekts durch Fixieren und darauffolgendes Bewegen des Trägers mitsamt dem abzuziehenden Objekt, während die Trennelemente den Rest des Stapels am Nachfolgen hindern. Der Träger kann entlang der Stapelachse so an das zu vereinzelnde Objekt herangefahren werden, dass er in der Lage ist, es zu fixieren. Bei fixiertem Objekt und Eingriff der Trennelemente kann der Träger dann durch Bewegung entlang der Stapelachse, vom Stapel weg, das Objekt vereinzeln. Ein Beenden der Fixierung erlaubt es dann, das vereinzelte Objekt aus dem Träger zu entnehmen und der Weiterverwendung zuzuführen.

Alternativ kann eine Untermenge der oben beschriebenen Trennelemente entlang der Stapelachse beweglich gelagert sein, und so, nach dem Eingreifen in den Stapel, durch eine Bewegung entlang der Stapelachse ein Objekt vom Stapel separieren. Dies ist allerdings konstruktionstechnisch komplizierter zu lösen.

In einer bevorzugten Ausführung der Erfindung umfasst der oben beschriebene Träger eine Saugvorrichtung, um einen Unterdruck zwischen einer Wand eines abzuziehenden Objekts und dem Träger zu erzeugen. Der erzeugte Unterdruck fixiert dabei das Objekt im Träger.

Alternativ kann ein Träger das Objekt auch durch Greifen oder durch eine Klebefläche fixieren. Der Vorteil einer Saugvorrichtung ist die Toleranz bezüglich der Ausrichtung des vom Stapel abzuziehenden Objekts. Zusätzlich kann das Ein- und Ausschalten der Saugvorrichtung dabei sehr präzise die Fixierung aktivieren oder lösen, und der Unterdruck wirkt auf eine verhältnismässig grosse Fläche des Objekts, was punktuelle Krafteinwirkungen und damit Beschädigungen des Objekts minimiert.

Bevorzugterweise befindet sich am Träger ein flexibler Dichtungsring zum Abdichten zwischen dem Träger und dem abzuziehenden Objekt. Ein flexibler, z.B. schaumstoffartiger, Dichtungsring erlaubt das Herstellen eines Unterdrucks zwischen dem Träger und einer Objektwand mit einer, gegenüber unflexiblen Gummidichtungen, erhöhten Toleranz für verschiedene Ausrichtungen des Objekts. Es hat sich in Versuchen gezeigt, dass so das Ansaugen von relativ zur Stapelachse bis zu 30° schiefstehenden Objekten erreicht werden kann.

In einer besonders bevorzugten Ausführung der Erfindung umfasst der Träger zwei Saugvorrichtungen, die als koaxial angeordnete Balgsauger ausgebildet sind. Dabei ist eine Mündung eines inneren Balgsaugers weiter innerhalb des Trägers angeordnet als eine sehr flexible Mündung eines äusseren Balgsaugers. Der innere Balgsauger hat die Aufgabe, das zu vereinzelnde Objekt weit genug in den äusseren, flexibleren Balgsauger hinein zu ziehen, um einen Unterdruck zwischen äusserem Sauger und Objekt zu erlauben. Sobald das Objekt ausreichend dicht auf dem äusseren Balgsauger sitzt, wirkt der stärkere Unterdruck des äusseren Saugers. Dieser Unterdruck führt dann zu einer Kompression von beiden Balgsaugern, wobei der äussere Balgsauger auf dem Träger aufsetzt. Durch das Aufsetzen des äusseren Balgsaugers auf den Träger, ist dieser nicht weiter komprimierbar und das Objekt kann durch den Unterdruck im Träger ausgerichtet werden, so dass z.B. der Objektrand oder Teile des Objekts an der Mündung das Balgsaugers anliegen.

Alternativ kann der Träger z.B. auch nur ein Saugsystem zur Erzeugung des Unterdrucks beinhalten. Hier müssen dann die Schritte der Herstellung einer guten Dichtigkeit zwischen Objekt und Träger, der Ausrichtung und des Fixierens des Objekts auf dem Träger, sowie des Abziehens des Objekts vom Stapel von einem Sauger geleistet werden.

Das erfindungsgemässe Verfahren zur Vereinzelung eines Stapels von Objekten umfasst folgende Schritte:
a) Bereitstellen des Stapels von Objekten;
b) Positionieren das Stapels von Objekten so, dass ein endseitig liegendes Objekt des Stapels an einer Mehrzahl von Trennelementen aufliegt;
c) Wegbewegen der Trennelemente der Mehrzahl vom Stapel durch einen Mechanismus;
d) Neupositionierung des Stapels, insbesondere durch Fallen auf einen Träger, so dass die Trennelemente, in einer dem Stapel zugewandten Position ihres Bewegungsspielraums, zwischen das endseitige Stapelobjekt und ein ihm benachbartes Objekt eingreifen;
e) Freigeben der Trennelemente der Mehrzahl vom Mechanismus zum Wegbewegen der Trennelemente vom Stapel, wobei die Trennelemente der Mehrzahl von einer Federkraft zum Eingreifen in den Stapel gedrückt werden;
f) Wegbewegen des endseitig am Stapel liegenden Objekts vom Stapel, insbesondere durch das Fixieren und Abziehen des Objekts durch einen beweglichen Träger;
g) Wiederholung der Schritte c - f so oft, bis ein gewünschter Vereinzelungsgrad erreicht ist oder alle Objekte des Stapels vereinzelt wurden.

Bevorzugterweise wird der Stapel während des Schrittes d) des oben beschriebenen Verfahrens, durch Fallen und anschliessendem Stoppen des Falls durch ein Bauteil, in Bezug auf die Trennelemente neu positioniert.

D. h. nach dem Herausbewegen der Trennelemente durch Aktivieren des Mechanismus, wird der Stapel durch die Schwerkraft bewegt und dann in seinem Fall auf der entsprechenden Höhe gestoppt, so dass die Trennelemente zwischen das nächste zu vereinzelnde Objekt und seinen Nachbarn eingreifen können.

Alternativ zum Fallen können auch bewegliche Schiebeelemente auf ein Ende oder beide Enden des Stapels einwirken, um den Stapel geeignet entlang der Stapelachse zu verschieben. Dies ist natürlich aufwendiger zu lösen als ein Ausnutzen der Schwerkraft, bleibt aber eine Option, falls das Fallen, z.B. aus Platzgründen, nicht praktikabel ist.

In einer bevorzugten Ausführung des Verfahrens kommt das zu vereinzelnde Objekt des Stapels vor dem Schritt e) mit einem Träger in Kontakt. Der Träger ist dabei ein Bauteil, welches in der Lage ist, das zu vereinzelnde Objekt einzeln zu tragen und der weiteren Verwendung zuzuführen.

Alternativ kann das vereinzelte Objekt auch bei Schritt f) direkt auf ein Förderband fallen und von diesem der weiteren Verwendung zugeführt werden.

In einer bevorzugten Ausführung des Verfahrens wird das abzutrennende Objekt durch einen, entlang der Stapelachse beweglichen, Träger temporär fixiert und während es am Träger fixiert ist, vom Stapel abgezogen, indem sich der Träger innerhalb seines Bewegungsspielraums vom Stapel entfernt. Dabei kann der Träger sich vor dem Schritt f), besonders bevorzugt vor dem Schritt e), so bewegen, dass er mit dem zu vereinzelnden Objekt in Kontakt gerät, und dieses dann fixieren. Ist das Objekt am Träger fixiert, wird der Träger während des Schrittes f) vom Stapel wegbewegt und zieht damit auch das Objekt vom Stapel ab. Ein Lösen der Fixierung vom Objekt am Träger macht dann die weitere Verwendung des Objekts möglich.

Vorteil dieses Verfahrens ist es, dass das Objekt nach der Vereinzelung bereits auf einem individuell steuerbaren Bauteil sitzt und damit individuell kontrolliert weiterverwendet werden kann, anders als wenn es sich z.B. auf einem Förderband befände.

Alternativ kann das Objekt auch mit anderen Mitteln vom Stapel wegbewegt werden. Es kann z.B. eine Teilmenge der Mehrzahl der Trennelemente nach dem Schritt e) eine Bewegung entlang der Stapelachse ausführen und das zu vereinzelnde Objekt so vom Stapel lösen und beispielsweise auf ein Förderband fallen lassen.

Bevorzugterweise wird in dem Verfahren das zu vereinzelnde Objekt durch einen Unterdruck temporär am Träger fixiert. Dabei wird nach dem Herstellen des Kontakts zwischen Objekt und Träger eine Saugvorrichtung aktiviert, wobei sich zwischen einer Objektwand und dem Träger ein Unterdruck bildet. Solange der Sauger aktiviert bleibt, ist das Objekt damit am Träger fixiert und kann wie oben beschrieben vereinzelt werden. Vorteil dieses Verfahrens ist es, dass der Unterdruck das Objekt im Vergleich zu anderen Methoden zuverlässig fixiert, die Fixierung dabei aber schnell wieder gelöst werden kann.

Alternativ kann auch eine andere Methode verwendet werden, um ein Objekt am Träger temporär zu fixieren, beispielsweise mittels am Träger befestigter Greifelemente. Dies ist allerdings von der Ausformung der Objekte abhängig und kann schwieriger zu bewerkstelligen sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1.1: Eine Querschnittsansicht einer ersten Ausführungsform der erfindungsgemässen Vorrichtung in einer Ebene, die die Stapelachse der gestapelten Objekte enthält;
- Fig. 1.2: eine isometrische Draufsicht auf die erste Ausführungsform;
- Fig. 1.3: eine direkte Draufsicht auf die erste Ausführungsform;
- Fig. 2.1: eine Querschnittsansicht einer zweiten Ausführungsform der erfindungsgemässen Vorrichtung mit einem anderen Träger;
- Fig. 2.2: eine Detailansicht aus der Figur 2.1 um ein Trennelement herum, mit vergrössertem Massstab;
- Fig. 3.1: eine Querschnittsansicht einer dritten Ausführungsform der erfindungsgemässen Vorrichtung in einer Ebene, die die Stapelachse der gestapelten Objekte enthält;
- Fig. 3.2: eine Detailansicht aus der Figur 3.1 um ein Trennelement herum, mit vergrössertem Massstab;
- Fig. 3.3: eine isometrische Draufsicht der dritten Ausführungsform; und
- Fig. 3.4: eine direkte Draufsicht auf die dritte Ausführungsform;
- Fig. 4: eine Verbildlichung eines Verfahrens zur Kapselverzeinzelung durch die erste Ausführungsform der erfindungsgemässen Vorrichtung in Querschnittsansicht.

Grundsätzlich sind in den Figuren gleiche Teile mit gleichen Bezugszeichen versehen.

### Wege zur Ausführung der Erfindung

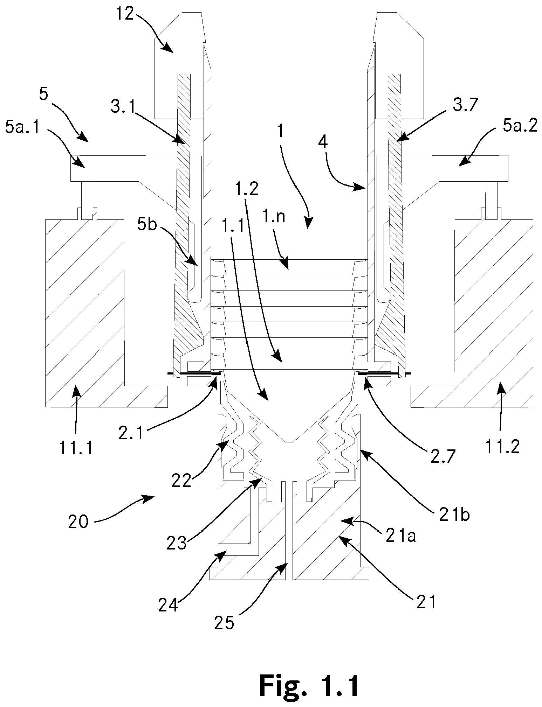

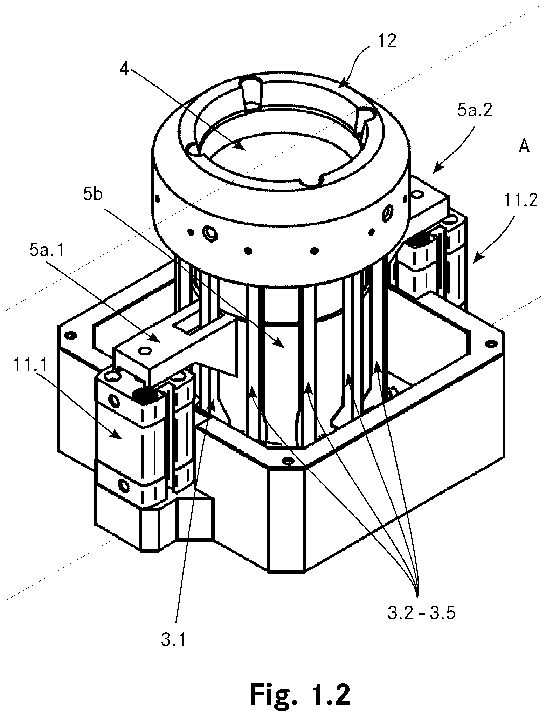

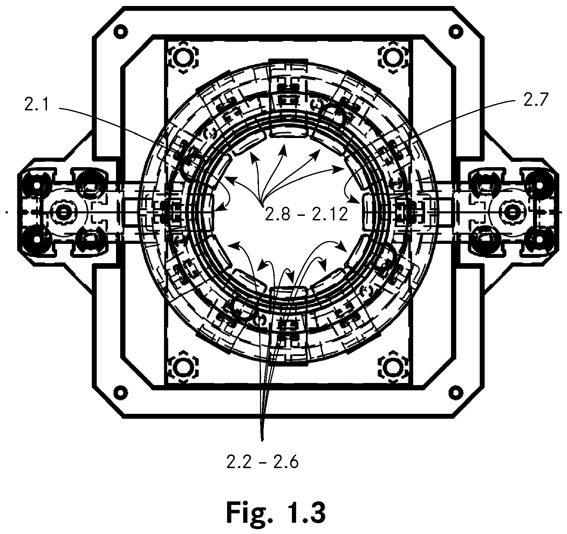

Die Figuren 1.1, 1.2 und 1.3 zeigen eine erste Ausführungsform der erfindungsgemässen Vorrichtung, hier zur Vereinzelung eines Stapels von becherartigen Kapseln aus einem Faserwerkstoff, wobei Figur 1.1 eine schematische Schnittzeichnung ist, während die Figur 1.2 die Vorrichtung in einer isometrischen Draufsicht von aussen zeigt. Die Schnittebene, die für Figur 1.1 gewählt wurde, ist in der Figur 1.2 als gestrichelte Umrandung A zu sehen.

Die gewählte Schnittebene von Figur 1.1 beinhaltet die Stapel- und Symmetrieachse eines Stapels 1 von becherartigen Kapseln 1.1 - 1.n aus einem Faserwerkstoff, wobei diese Achse wiederum in der Bildebene aufrecht steht.

Die Vorrichtung umfasst eine Führung 4, ausgeführt als Rohr mit kreisförmigem Querschnitt, dessen Symmetrieachse auf derselben Gerade liegt wie die des Stapels 1 der becherartigen Kapseln 1.1 - 1.n. Der Rohr-Innendurchmesser ist dabei an einen Aussendurchmesser der aufzunehmenden Kapseln 1.1 - 1.n angepasst, die Rohrlänge an die maximale Höhe der zu verarbeitenden Stapel, wobei der eingezeichnete Stapel 1 deutlich kürzer ist. Die Wandstärke der Führung 4 ist konstant und beträgt etwa 5 % des Innendurchmessers.

Am unteren Ende der Führung 4 befindet sich die unterste Kapsel 1.1 des zu vereinzelnden Stapels 1. Wie alle Kapseln 1.1 - 1.n des Stapels 1, hat die zylindersymmetrische Kapsel 1.1 dabei eine flache Oberseite und einen kegelförmigen becherartigen Körper, der sich nach unten hin verjüngt und in einer flächigen Unterseite endet. Dabei weist die Kegelform des Körpers der Kapsel 1.1 im oberen Bereich, über einen Abschnitt von etwa einem Drittel ihrer Höhe, einen geringeren Öffnungswinkel und damit eine weniger starke Verjüngung nach unten hin auf, als der untere Bereich ihres Körpers. Die Unterseite der Kapsel 1.1 ist eine, im Vergleich zur Oberseite, deutlich kleinere und wiederum senkrecht zur Symmetrieachse der Kapsel 1.1 stehende Fläche.

An ihrer Oberseite steht ein Rand über den Körper der Kapsel 1.1 hinaus und von ihrer Symmetrieachse weg ab. Die Symmetrieachse der Kapseln 1.1 - 1.n fällt mit der Symmetrieachse der Führung 4 zusammen. Die Kapseln 1.1 - 1.n sind an ihrer Oberseite offen und stecken dadurch beim Stapeln ineinander, wobei nur ein kleiner Teil einer Kapsel, z.B. 1.2, inklusive des abstehenden Rands, aus der jeweils unteren benachbarten Kapsel, hier 1.1, hinausragt.

Die Kapsel 1.1 ist dabei so positioniert, dass die Unterseite ihres Rands bündig mit der Unterseite der Führung 4 abschliesst und der Kapselkörper aus der Führung 4 nach unten herausragt.

Die Figur 1.3 zeigt, dass am Umfang des unteren Endes der Führung 4 12 Trennelemente 2.1 - 2.12 gleichmässig über den Umfang verteilt angeordnet sind. Die beiden im Querschnitt der Figur 1.1 sichtbaren Trennelemente 2.1 und 2.7 befinden sich einander diametral gegenüber und reichen unter der Führung 4 durch, bis unter den Rand der untersten Kapsel 1.1. Ihr Querschnitt hat die Form eines Rechtecks mit einer Länge, die grösser ist als die Wandstärke der Führung 4. In Figur 1.3 ist ausserdem zu erkennen, dass die Trennelemente auch in der Draufsicht eine rechteckige Form haben, mit einer Breite, die in etwa der Hälfte ihrer Länge entspricht.

Die Trennelemente 2.1 - 2.12 sind jeweils mit einer Blattfeder 3.1 - 3.12 verbunden, die das jeweilige Trennelement radial nach innen, in Richtung des Stapels 1 drückt. In Figur 1.2 sind die Blattfedern 3.1 sowie 3.2 - 3.6 sichtbar, während in Figur 1.1 nur die zwei Blattfedern 3.1 und 3.7 zu sehen sind.

Die Blattfedern 3.1 - 3.12 befinden sich ausserhalb der Führung 4 und laufen parallel zu dieser von ihrer Aufhängung am oberen Ende der Führung 4 bis zu einem Trennelement 2.1 - 2.12 am unteren Ende. Die oberen Enden der Blattfedern sind in einem flanschartigen Oberteil 12 der Führung 4 aufgehängt.

Der Querschnitt jeder Blattfeder 3.1 - 3.12 hat in einem oberen Bereich, der sich über den Grossteil der Länge der Blattfeder 3.1 - 3.12 erstreckt, die Form eines langgezogenen Rechtecks mit einer Stärke, die vergleichbar zur Wandstärke der Führung 4 und einer Höhe die vergleichbar zur Länge der Führung 4 ist.

Der untere Bereich jeder Blattfeder 3.1 - 3.12, der sich unmittelbar oberhalb des jeweiligen Trennelements 2.1 - 2.12 befindet, weist eine Verdickung auf, die sich auf der dem Stapel 1 zugewandten Seite befindet und nach unten hin zunimmt. Dabei wächst die Blattfeder 3.1 - 3.12 maximal auf etwa die doppelte Stärke, im Vergleich zum oberen Teil der Feder. Auf Höhe ihrer Maximalstärke bleibt die Stärke der Blattfeder 3.1 - 3.12 über eine kurze Strecke konstant und verjüngt sich dann nach unten hin wieder. Hier nimmt sie eine Stärke an, die schmaler ist als ihr oberer Teil. Der schmale untere Bereich jeder Blattfeder 3.1 - 3.12 ragt dabei in eine zur Zeichnungsebene parallele Bohrung in dem jeweiligen Trennelement 2.1 - 2.12, wodurch die Federkraft quer zur Stapelachse auf das jeweilige Trennelement 2.1 - 2.12 wirkt. Die Tiefe der Blattfedern 3.1-3.12 ist nur in der Figur 1.2 zu sehen und entspricht in etwa der Stärke im oberen Bereich jeder Blattfeder 3.1-3.12.

Die Blattfedern 3.1 - 3.12 sind so angebracht, dass der Bereich der maximalen Stärke zur vollständigen Entspannung der Feder in die Führung 4 eindringen müsste. Dadurch sind sie permanent im gespannten Zustand, und liegen an der Führung 4 an, was wiederum auch die stapelseitige Endposition des Bewegungsspielraums der Trennelemente 2.1 - 2.12 definiert.

In der isometrischen Draufsicht gemäss Figur 1.2 erscheint die Führung 4 als Rohr mit runder Öffnung nach oben, welches in der Bildebene aufrecht steht. Die Aufhängung 12 der Blattfedern 3.1 - 3.12 sitzt auf dem oberen Ende der Führung 4. Aussen an der Führung 4 sind die Blattfedern 3.1 - 3.5 angeordnet. Sie verlaufen parallel zur Führung 4 und sind gleichmässig auf ihrem Umfang verteilt. Die Breite der Blattfedern 3.1 - 3.12 ist wesentlich geringer als ein Zwölftel des äusseren Führungsumfangs, d.h. es gibt grössere Lücken zwischen den Blattfedern 3.1 - 3.12.

Ausserhalb der Führung 4 befindet sich auch eine Hülse 5 zur Bewegung der Trennelemente radial nach aussen.

Die Hülse 5 hat einen rohrförmigen Körper 5b mit leicht grösserem Innendurchmesser als der Aussendurchmesser der Führung 4. Die Wandstärke des rohrförmigen Teils 5b ist dabei so gewählt, dass er zwischen die Führung 4 und den oberen Teil der Blattfedern 3.1 - 3.12 passt.

Der rohrförmige Teil 5b der Hülse 5 teilt sich mit der Führung 4 dieselbe Symmetrieachse, ist auf der Führung 4 axial verschiebbar angeordnet und wird von den Blattfedern 3.1 - 3.12 umgeben. Am unteren Rand der Hülse 5 befindet sich eine wulstartige Verdickung, die nach aussen, in Richtung der Blattfedern 3.1 - 3.12 gerichtet ist, wobei sich hier die Wandstärke der Hülse 5 in etwa verdoppelt.

Zusätzlich hat die Hülse 5 zwei, ausgehend vom Hülsenkörper 5b radial nach aussen verlaufende, Ausleger 5a.1 und 5a.2, die mit Hebeelementen 11.1 und 11.2 verbunden sind, wobei die Ausleger 5a.1 und 5a.2 der Hülse 5 die Blattfedern 3.1 und 3.7 jeweils umfassen (siehe Figur 1.2), so dass die Blattfedern 3.1 - 3.12 von der Hülse 5 nur am unteren Ende erfasst werden.

In der Figur 1.1 ist die Hülse 5 dabei so positioniert, dass sie die Blattfedern 3.1 - 3.12 nicht berührt.

In einem oberen Bereich der Hülse 5 stehen zu beiden Seiten der Führung 4 und auf etwa der Hälfte von deren Höhe waagerecht radial nach aussen zwei Trägerteile (5a.1 und 5a.2 in Figur 1.2) ab und sind an ihrer Unterseite jeweils mit einem Hebeelement 11.1 und 11.2 verbunden.

Wird die Hülse 5 mit Hilfe der Hebeelemente 11.1 und 11.2 nach unten bewegt, so drückt die untere Verdickung der Hülse 5 gegen die Verdickung der Blattfedern 3.1 - 3.12 und zwingt deren unteren Bereich so von der Stapelachse weg. Damit werden auch die Trennelemente 2.1 - 2.12 von der Stapelachse weg, in eine Position ohne Eingriff in den Stapel bewegt.

Unterhalb der Kapsel 1.1 befindet sich ein Träger 20 zum Fixieren und Wegziehen der Kapseln vom Stapel, wiederum bestehend aus den Komponenten 21 - 25. Der Träger 20 hat insgesamt eine zylindrische Form, wobei seine Zylinderachse wiederum auf derselben Gerade wie die Symmetrieachse der Führung 4 liegt. Sein äusserer Durchmesser entspricht dabei in etwa dem inneren Durchmesser der Führung 4 und seine Länge in etwa der Hälfte der Länge der Führung.

Das grösste Teilstück des Trägers 20 ist die Trägerbasis 21. Dabei ist diese Trägerbasis 21 in ihrer unteren Hälfte 21a massiv, während die obere Hälfte 21b durch eine von oben kommende Aussparung soweit ausgehöhlt ist, dass die Trägerbasis 21 sich hier auf eine dünne Aussenwand beschränkt.

Im unteren Teil 21a der Trägerbasis 21, befinden sich zwei Bohrungen 24 und 25. Die erste Bohrung 25 liegt dabei auf der Symmetrieachse der Trägerbasis 21 und durchsticht diese komplett, wobei sie in die obere Aussparung mündet. Die zweite Bohrung 24 liegt ausserhalb der Symmetrieachse und verläuft, ebenfalls von oben kommend, bis etwa zur Hälfte des massiven Teils 21a der Trägerbasis 21 und von da an waagerecht nach aussen, wobei sie wiederum auch die Trägerbasis 21 komplett durchsticht.

Die anderen beiden Hauptteile des Trägers 20 werden von zwei koaxial verlaufenden Bälgen 22, 23 gebildet, die sich innerhalb der oberen Aussparung des oberen Teils der Trägerbasis 21a befinden. Der Aussendurchmesser im unteren Bereich des ersten Balgs 22 ist dem Innendurchmesser der Aussparung in der Trägerbasis 21 angepasst. Dabei liegt seine Symmetrieachse wieder auf derselben Geraden wie die Symmetrieachse der Trägerbasis 21, der Führung 4 und des Stapels 1. Die Länge des Balgs 22 lässt etwa ein Drittel des Balgs 22 oben aus dem umwandeten Bereich 21a der Trägerbasis 21 hinausragen womit das obere Ende des Balgs 22 den höchsten Punkt des Trägers 20 bildet. Dabei ist der Aussendurchmesser der Mündung des Balgs 22, die sich ausserhalb der Trägerbasis 21 befindet, in etwa gleich dem der Trägerbasis 21.

Der Balg 22 ist oben offen und die Mündung an diesem Ende kann von der Kapselunterseite komplett verschlossen werden. Berühren sich Träger 20 und Kapsel 1.1, kann über die Bohrung 24 innerhalb des Balgs 22 ein Unterdruck erzeugt und damit die Kapsel 1.1 am Träger 20 fixiert werden.

Der zweite Balg 23 verläuft koaxial zum Balg 22 und liegt mit einem kleineren Durchmesser innerhalb von diesem. Auch er ist unten an der Trägerbasis 21 befestigt und hat eine obere offene Mündung, die zur Kapselunterseite von Kapsel 1.1 zeigt. Dabei ist seine Länge allerdings geringer als die des Balgs 22 und seine obere Mündung liegt etwa auf Höhe des oberen Rands der Trägerbasis 21.

Das Volumen innerhalb des Balgs 23 kann über die Bohrung 25 evakuiert werden, falls die Kapselwand (z.B. von Kapsel 1.1) ihn oben abschliesst.

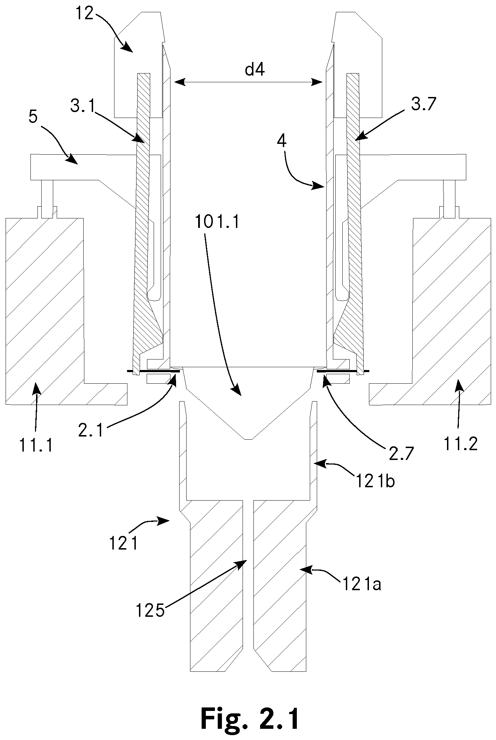

Figur 2.1 zeigt eine zweite Ausführungsform der erfindungsgemässen Vorrichtung wieder als Querschnitt, analog zu Figur 1.1. Der Aufbau der Vorrichtung unterscheidet sich von der Vorrichtung aus den Figuren 1.1 und 1.2 durch eine andere Form des Trägers der hier ausschliesslich aus der Trägerbasis 121 mit der Bohrung 125 besteht. Die Kennzeichnung der Bauteile, die sich nicht von der in Figur 1.1 gezeigten Form unterscheiden, wurde beibehalten.

Die Trägerbasis 121 hat eine ähnliche Form und dieselbe Platzierung wie die Trägerbasis 21 aus der Figur 1.1 und ist zylindersymmetrisch. In einem oberen Bereich 121b ist die Trägerbasis 121 rohrförmig und nach oben hin offen, wobei dieser Bereich, entlang ihrer Symmetrieachse, etwas weniger als die Hälfte der Trägerbasis 121 ausmacht. Der Innendurchmesser des rohrförmigen Bereichs 121b ist so gewählt, dass die Trägerbasis 121 von der unteren Wand zusammen mit dem Rand der Kapsel 101.1 komplett abgedeckt werden kann, gleichzeitig aber die Kapsel bis zu ihrem Rand in den oberen Bereich 121b der Trägerbasis 121 eintreten kann. Der Innendurchmesser des oberen Bereichs 121b der Trägerbasis 121 verjüngt sich dabei, von oben kommend, leicht, wodurch die Passung der Kapsel 101.1 auf die Trägerbasis 121 verbessert wird.

Daraus ergibt sich auch, dass der Innendurchmesser des rohrförmigen Bereichs 121b kleiner ist, als der Innendurchmesser d4 der Führung 4. Der Aussendurchmesser des Bereichs 121b entspricht in etwa dem Innendurchmesser d4 der Führung 4. Der untere Bereich 121a, der den Rest der Trägerbasis 121 ausmacht, ist zylinderförmig und massiv, wobei er einen Aussendurchmesser hat, der in etwa dem Innendurchmesser des Bereichs 121b entspricht. Die beiden Bereiche 121a und 121b stehen direkt in Verbindung und die Unterseite des rohrförmigen Bereichs 121b wird von der Oberseite des zylindrischen Bereichs 121a komplett verschlossen. Auf der Symmetrieachse der Trägerbasis 121 liegend, befindet sich eine Bohrung 125, die den unteren Bereich 121a der Trägerbasis 121 komplett durchsticht. Sitzt eine Kapsel auf der Trägerbasis 121, so kann das Volumen innerhalb des rohrförmigen Bereichs 121b und unterhalb der Kapsel, über diese Bohrung evakuiert werden, womit die Kapsel auf der Trägerbasis 121 fixiert wird. Der wesentliche Unterschied zum Träger aus Figur 1.1 besteht in dem Fehlen der konzentrischen Bälge (22 und 23 in Fig. 1.1), und den zwei individuell evakuierbaren Bereichen innerhalb dieser Bälge.

Figur 2.1 zeigt eine Kapsel 101.1 derselben Form wie die Kapsel 1.1 in Figur 1.1 . Bei dieser Kapsel 101.1 ist der Körper nach unten hin stärker glockenförmig ausgeprägt. Der Innendurchmesser d4 der Führung 4 hat bei diesem Aufbau einen Wert von 61 mm.

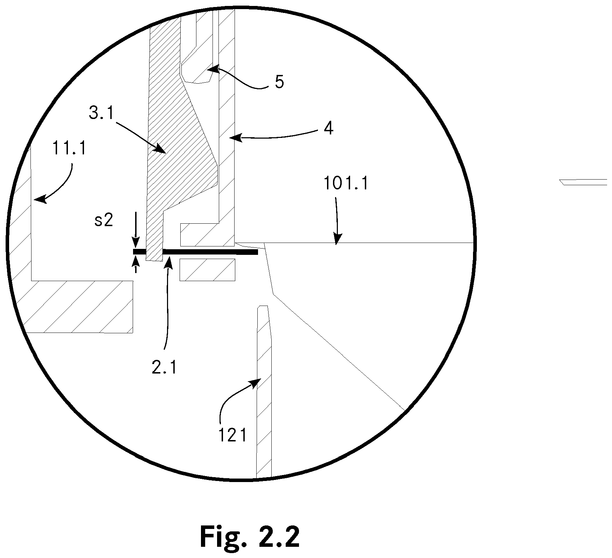

Die Figur 2.2 zeigt einen kreisförmigen Ausschnitt der Figur 2.1 in einem grösseren Massstab, bei dem der Bereich, wo das Trennelement 2.1 unter den Rand der Kapsel 101.1 greift, im Zentrum liegt. Die Dicke s2 der Trennelemente 2.1 - 2.12 beträgt 0,5 mm.

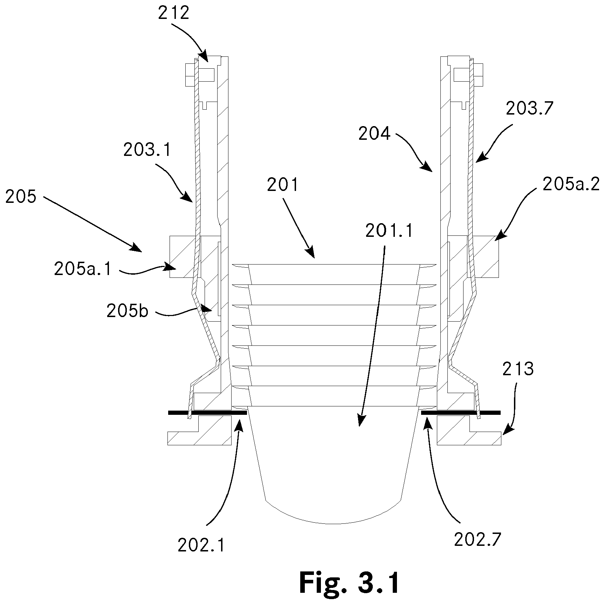

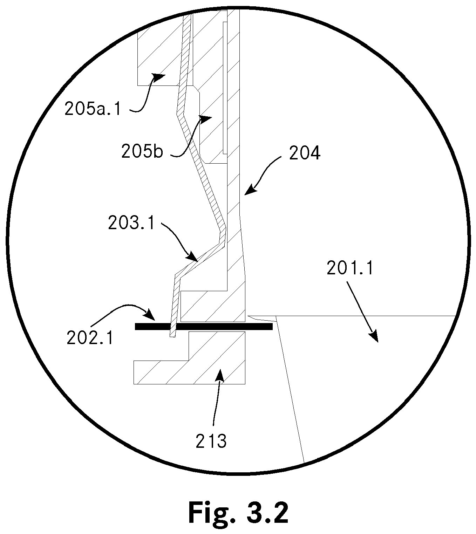

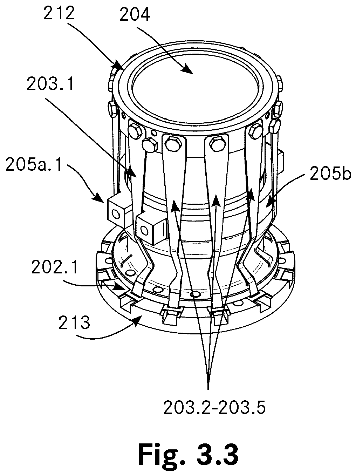

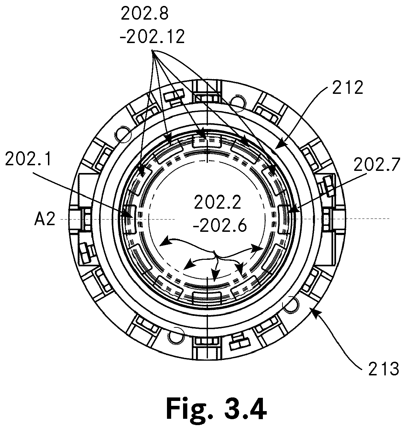

Figur 3.1 zeigt eine dritte Ausführungsform der erfindungsgemässen Vorrichtung, wieder im Querschnitt. Auch diese Ausführung ist geeignet, einen Stapel 201 von becherartigen Kapseln zu vereinzeln. Der Einfachheit halber ist keine Einrichtung zum Wegbewegen der Kapseln vom Stapel dargestellt. Dazu kann z.B. der in Figur 1.1 dargestellte Träger 21 oder der Träger 121 aus Figur 2.1 verwendet werden. Figur 3.1 zeigt die Vorrichtung als schematische Schnittzeichnung, bei der die Schnittebene die Stapelachse des Stapels 201 enthält. Figur 3.2 zeigt einen Ausschnitt aus Figur 3.1 in einem grösseren Massstab, die Figur 3.3 zeigt dieselbe Vorrichtung als isometrische Draufsicht und Figur 3.4 zeigt die Vorrichtung als direkte Draufsicht, wobei hier die Schnittebene A2 der Querschnittszeichnung gemäss Figur 3.1 eingezeichnet ist.

Die Orientierung der Figur 3.1 ist analog zu Figur 1.1, die Stapelachse steht in der Bildebene aufrecht, wobei der Bauch der Kapseln nach unten zeigt. Der Stapel 201 befindet sich in einer Führung 204, die rohrförmig ist und deren Symmetrieachse mit der Stapelachse zusammenfällt. Figur 3.1 zeigt auch eine andere Kapselform, als sie in Figur 1.1 - Figur 2.2 zu sehen ist. Die Kapsel 201.1 des Stapels 201 hat ebenfalls einen, sich nach unten hin kegelförmig verjüngenden Körper, allerdings mit einheitlichem Öffnungswinkel über den ganzen Kapselkörper. Die Unterseite der Kapsel 201.1 ist im Gegensatz zur Kapsel 1.1 aus Figur 1.1 nach unten hin gewölbt und nicht flach.

Die Führung 204 hat über ihre Länge zwei verschiedene Bereiche mit konstantem Innendurchmesser, mit einem unteren Bereich, dessen Innendurchmesser in etwa dem Aussendurchmesser des Stapels 201 entspricht und einem oberen Bereich mit einem etwas grösseren Innendurchmesser. Dabei macht der untere Bereich etwa ein Zehntel der Gesamtlänge der Führung 204 aus. Vom ersten zum zweiten Bereich gibt es einen linearen Übergang des Innendurchmessers, der auch etwa ein Zehntel der Gesamtlänge der Führung 204 ausmacht.

Die Führung 204 hat dabei eine Länge von etwa dem Doppelten ihres kleinsten Innendurchmessers. Auch der Aussendurchmesser der Führung 204 variiert, wobei die obere Hälfte der Führung 204 einen etwas grösseren Aussendurchmesser als die untere Hälfte hat, wobei der grössere Aussendurchmesser in etwa 15 % und der geringere Aussendurchmesser in etwa 7 % grösser ist als der Innendurchmesser der Führung 204.

Das untere Ende der Führung endet mit einem Flansch, an dem der Haltering 213 angebracht ist, der wiederum an seiner Oberseite, die mit der Unterseite des Flansches der Führung in Berührung steht, Aussparungen enthält, in denen sich die Trennelemente 202.1 - 202.12 befinden und diese sich radial, bezogen auf die Stapelachse, bewegen können.

Unterhalb der Führung 204 reichen die Trennelemente 202.1- 202.12, von denen sich die diametral gegenüberliegenden Elemente 202.1 und 202.7 in der Zeichenebene befinden, von ausserhalb der Führung 204 in Richtung Stapelachse, so dass der Stapel die Führung 204 an diesem Ende nicht verlassen kann. Sie haben eine Länge von etwa dem Doppelten der Wandstärke der Führung 204.

Vergleichbar zu der in der Figur 1.1 präsentierten Ausführung laufen vom oberen Ende der Führung 204 bis zu ihrem unteren Ende Blattfedern 203.1 - 203.12 der Führung 204 aussen entlang. In dieser Ausführung haben die Blattfedern 203.1 - 203.12 allerdings eine andere Form. Sie haben über ihre Länge hinweg dieselbe Stärke, die bezogen auf ihre Länge sehr gering ist. Dafür weisen sie einen gebogenen Verlauf auf: Das obere Ende jeder Blattfeder ist an einer flanschartigen Struktur 212 festgeschraubt. Von dieser Befestigung verlaufen sie zunächst parallel zur Führung 204 nach unten. Innerhalb ihres unteren Drittels biegen sich die Blattfedern 203.1 - 203.12 in Richtung Stapel 201 und verlaufen so schräg nach innen, in Richtung der Führung 204. Kurz über dem Ende der Führung 204 biegen sich die Blattfedern 203.1 - 203.12 zurück und laufen wieder von der Führung 204 weg nach aussen. Bündig mit ihrem oberen Teil, machen sie, kurz vor ihrem unteren Ende, eine weitere Biegung und laufen dann wieder parallel zum oberen Teil weiter nach unten, etwas über das Ende der Führung 204 hinaus. Durch ihre Anbringung können die Blattfedern 203.1 - 203.12 ihre komplett entspannte Form in der Vorrichtung nicht annehmen, sondern stehen mit ihrem, radial am weitesten nach innen reichenden, Abschnitt mit Vorspannung an der Aussenseite der Führung 204 an. Der untere Bereich der Blattfedern 203.1 - 203.12 reicht wieder in eine Aussparung innerhalb der Trennelemente 202.1 - 202.12, wodurch die Federkraft auf die Trennelemente 202.1 - 202.12 übertragen wird.

Der Mechanismus zum Wegbewegen der Trennelemente vom Stapel ist durch eine Hülse 205, mit einem rohrförmigen Körper 205b, realisiert. Der Innenradius ihres Körpers 205b ist dabei etwas grösser als der Aussenradius der Führung 204 und der Körper 205b ist koaxial mit der Führung 204 und axial verschiebbar angeordnet und befindet sich zwischen der Führung 204 und den Blattfedern 203.1 - 203.12. Die Länge der Hülse 205 entspricht dabei etwa einem Viertel der Länge der Führung 204 und sie befindet sich auf Höhe des unteren Bereichs der Führung 204, wo deren Aussendurchmesser reduziert ist. Der Aussendurchmesser ihres Körpers 205b erlaubt es der Hülse 205, eine Position einzunehmen, bei der sie die Blattfedern nicht berührt. Der Hülsenkörper 205b hat dabei selber zwei etwa gleich grosse Bereiche mit verschiedenen Aussendurchmessern, wobei der obere Bereich einen grösseren Aussendurchmesser hat als der untere. Ausserdem ist die untere Aussenkante des Körpers 205b der Hülse 205 abgerundet. Auf dem oberen Bereich des Hülsenkörpers 205b sitzen Verbindungselemente 205a.1 und 205a.2, die radial von der Führung 204 abstehen und über die Blattfedern 203.1 - 203.12 hinausstehen. Diese haben einen nahezu quadratischen Querschnitt, wobei die Kantenlänge ihres Querschnitts etwa der Hälfte der Länge des Hülsenkörpers 205b beträgt, wodurch sie sich nur auf dem Bereich mit grösseren Aussendurchmesser des Hülsenkörpers 205b befinden.

Figur 3.2 zeigt einen Ausschnitt aus Figur 3.1 in einem grösseren Massstab, bei dem, wie auch in Figur 2.2, der Bereich um ein Trennelement besser zu erkennen ist.

Figur 3.3 zeigt dieselbe Ausführung der Erfindung wie die Figuren 3.1 und 3.2, diesmal in isometrischer Draufsicht. Die Struktur des Aufbaus wird von der Führung 204 vorgegeben, an deren oberen Rand die zwölf Blattfedern 203.1 - 203.12 mit jeweils einer Schraube angebracht sind, wobei in der Ansicht von Figur 3.3 die Blattfedern 203.1 - 203.5 gekennzeichnet sind. Die Blattfedern 203.1 - 203.12 haben ihre grösste Breite, von etwa einem Vierundzwanzigstel des Führungsumfangs, am Ort ihrer Anbringung und verjüngen sich linear bis zur ersten Biegung in ihrem unteren Bereich auf etwa ein Viertel ihrer ursprünglichen Breite. Ab hier bleibt ihre Breite bis zur zweiten Biegung konstant und nimmt dann bis zur dritten Biegung wieder zu. Die Breite ihres unteren Bereichs, der auch in die Aussparungen in den Trennelementen 202.1 - 202.12 tritt, ist geringer als die Breite an ihrer Aufhängung. Die Verbindungselemente 205a.1 und 205a.2 der Hülse befinden sich in den Bereichen der Blattfedern 203.1 und 203.7. Jedes Verbindungselement 205a. 1 und 205a.2 besteht selber aus zwei Verbindungsstücken, auf jeder Seite der jeweiligen Blattfeder 203.1 und 203.7, die an dem rohrförmigen Hülsenkörper angebracht sind und zwischen den Blattfedern 203.1 und 203.7 hindurch quer zur Stapelachse nach aussen ragen. Jedes Verbindungsstück ist dabei im Wesentlichen würfelförmig, wobei die zwei Verbindungsstücke auf einer Seite der Führung 205 miteinander bündige Aussenseiten haben, und auf Seite des Hülsenkörpers 205b mit diesem über ihre volle Breite verbunden sind.

Die Figur 3.3 zeigt ausserdem die Ausformung der zwölf Aussparungen im Haltering 213. Sie sind in einem oberen Bereich so gewählt, dass sie die Trennelemente 202.1 - 202.12 aufnehmen und die Oberseite der Trennelemente bündig mit der Unterseite der Führung 204 halten. Innerhalb der Aussparungen, die die Trennelemente 202.1 - 202.12 halten, befinden sich zusätzliche Nuten, die etwas schmaler, aber tiefer sind als die Aussparungen für die Trennelemente. Diese Nuten nehmen die Enden der Blattfedern 203.1 - 203.12 auf, die unten über die Trennelemente 202.1 - 202.12 hinausragen.

Figur 3.4 zeigt eine direkte Draufsicht auf die Ausführungsform gemäss den Figuren 3.1 - 3.3. Hier bildet die Symmetrieachse der Führung 204 den Mittelpunkt der Zeichnung und die Symmetrieachse selber sticht durch die Zeichenebene. Die Schnittebene A2 der Figuren 3.1 und 3.2 liegt horizontal in der Zeichenebene. Die Form der Trennelemente 202.1 - 202.12 entspricht einem Rechteck mit leicht abgerundeten Kanten, wobei ihre Breite etwas mehr als einem Zwölftel des Führungsumfangs entspricht und die Länge in etwa dem Doppelten der Wandstärke der Führung 204. Sie sind über den Umfang der Führung 204 (Fig. 3.1 - 3.3) gleichmässig verteilt angeordnet.

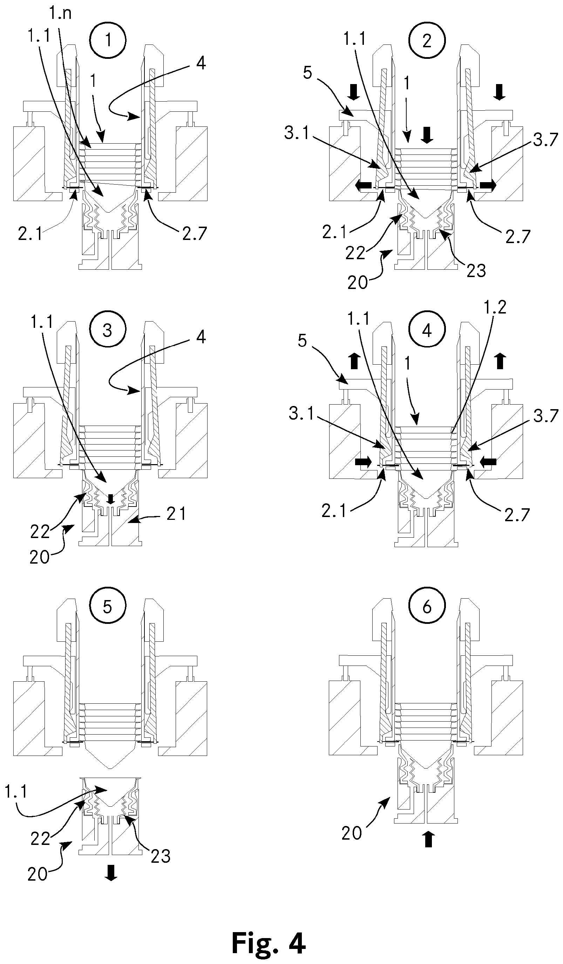

Figur 4 zeigt anhand der Querschnittszeichnung der ersten Ausführung der erfindungsgemässen Vorrichtung aus Figur 1.1 beispielhaft ein Verfahren zur Vereinzelung eines Stapels von becherartigen Kapseln. In der Beschreibung wird auf die Bezugszeichen der Figuren 1.1 - 1.3 zurückgegriffen, da diese die selbe Vorrichtung zeigen. Von den Trennelementen 2.1 - 2.12 sind wie bei Figur 1.1 nur die Trennelemente 2.1 und 2.7 abgebildet. Analog dazu sind auch nur die Blattfedern 3.1 und 3.7 abgebildet. Immer wenn in der folgenden Beschreibung von Trennelementen oder Blattfedern gesprochen wird, sind jeweils alle 12 mitgemeint, auch wenn nur die Bezugszeichen der jeweils abgebildeten Komponenten genannt werden.

Die Figur 4 beinhaltet die Verfahrensschritte 1 - 6, und zeigt anhand dieser die Vereinzelung der Kapsel 1.1 des Stapels 1.
1. Am Anfang des Vereinzelungsschrittes ruht der Stapel 1 becherartiger Kapseln 1.1 - 1.n auf den Trennelementen 2.1, 2.7. Die unterste Kapsel 1.1, ist dabei, bezogen auf die Symmetrieachse der Führung 4, schräg eingezeichnet, um auch die erfindungsgemässe Ausrichtung der Kapseln 1.1 - 1.n während der Vereinzelung zu illustrieren.
2. Durch Herunterbewegen der Hülse 5 werden die Blattfedern 3.1, 3.7 von der Führung 4 weggedrückt und die Trennelemente 2.1, 2.7 aus dem Stapel 1 herausgezogen. Dadurch fällt der Stapel 1 in den Träger 20. Am Träger 20 wirkt der Unterdruck des inneren Balgsaugers 23, wodurch die Kapsel 1.1 vollständig auf den äusseren Balgsauger 22 gezogen wird.
3. Die Kapsel 1.1 liegt vollständig auf der Mündung des äusseren Balgsaugers 22. Dadurch wirkt dessen Unterdruck, was zur Komprimierung des Balgsaugers 22 führt. Der äussere Balgsauger 22 zieht sich soweit zusammen, bis seine Mündung auf der Trägerbasis 21 aufsetzt. Die Kapsel 1.1 wird mit dem Balgsauger 22 bis zu ihrem Rand in den Träger 20 hineingezogen und, durch das Aufsetzen der Balgmündung auf der Trägerbasis 21, im Träger 20 so ausgerichtet, dass ihre Symmetrieachse mit der Symmetrieachse der Führung 4 zusammenfällt. Durch den Unterdruck zwischen Kapsel 1.1 und Träger 20 wird die Kapsel 1.1 ausserdem am Träger 20 fixiert.
4. Es wird nun die Hülse 5 wieder nach oben bewegt, wodurch die Blattfedern 3.1, 3.7 die Trennelemente 2.1, 2.7 in Richtung des Stapels 1 drücken. Die Trennelemente 2.1, 2.7 greifen zwischen die Ränder der zwei unteren Kapseln 1.1, 1.2 des Stapels 1 ein.
5. Der Träger 20 kann sich nun mit fixierter Kapsel 1.1 vom Stapel wegbewegen und die Kapsel 1.1 ihrer weiteren Verwendung zuführen. Nach dem Belüften der Balgsauger 22 und 23 ist die Kapsel 1.1 ohne Kraftaufwand vom Träger 20 lösbar.
6. Nachdem die vereinzelte Kapsel 1.1 vom Träger 20 entfernt wurde, kann der Träger 20 in die Anfangsposition bewegt werden, womit der nächste Vereinzelungsschritt möglich ist.

Die Erfindung ist nicht auf die dargestellten Ausführungsbeispiele beschränkt. Insbesondere können Komponenten wie die Trennelemente eine andere Form haben, die sich nach der konkreten Geometrie der gestapelten und zu vereinzelnden Objekte richtet.

Es ist beispielsweise denkbar, dass die Trennelemente deutlich schmaler ausgeführt werden, oder dass z. B. deren vordere Kante eine Rundung aufweist, die der Form der zu vereinzelnden Objekte angepasst ist. Auch in Anzahl und Anordnung um den Stapel herum können die Trennelemente von den dargestellten Beispielen abweichen.

Auch kann die Führung eine andere Form haben, oder sogar weggelassen werden. Für Objekte, die bei Draufsicht auf den Stapel z.B. rechteckig sind, kann anstelle eines Rohres eine Führung mit rechteckiger Grundform verwendet werden.

Es können des Weiteren abweichende Ausformungen des Trägers verwendet oder sogar andere Lösungen zum Wegbewegen der Kapseln vom Stapel gefunden werden, die ohne Träger auskommen.

Auch können die gefederten Lagerungen der Trennelemente bei gleicher Funktionalität anders gelöst sein, z.B. können Spiralfedern auf die Seite jedes Trennelements drücken, die dem Stapel abgewandt ist.

Die abgebildeten Kapseln sind lediglich als Beispiele für gestapelte Objekte zu verstehen, die durch die Erfindung vereinzelt werden können. Beispielsweise können die Kapseln auch andere Körperformen haben, z. B. vollständig konvex gewölbt oder glockenförmig. Es können auch andere Objekte als Kapseln, z.B. prismatische Verpackungselemente mit rechteckiger Grundfläche, von einer erfindungsgemässen Vorrichtung oder dem erfindungsgemässen Verfahren vereinzelt werden.

Zusammenfassend ist festzustellen, dass eine Vorrichtung mit einer Mehrzahl von einzeln federnd gelagerten Trennelementen im Zusammenspiel mit einem Mechanismus, der die Trennelemente in eine Position ohne Eingriff in den Stapel bewegen kann, in der Lage ist, ein effektives Vereinzeln von gestapelten Objekten, insbesondere becherartiger Kapseln, auch bei Schrägstellungen der Objekte bezogen auf die Stapelachse zu erlauben, ohne dass die Objekte dabei beschädigt werden, wobei die Vorrichtung einfach und kostengünstig aufgebaut ist.

## Patentansprüche

1. Vorrichtung zum Vereinzeln eines Stapels von Objekten, insbesondere von becherartigen Kapseln, insbesondere mit einem umlaufenden Rand,
**wobei:**
Trennelemente vorhanden sind, um zwischen benachbarte Objekte des Stapels von Objekten einzugreifen,
eine Mehrzahl dieser Trennelemente mit Eingriff in den Stapel um den Stapel herum angeordnet ist, und
die Trennelemente der Mehrzahl radial beweglich gelagert sind,
**dadurch gekennzeichnet, dass**
die Trennelemente der Mehrzahl einzeln federnd gelagert sind, und dass
die Vorrichtung einen Mechanismus zur Bewegung der Trennelemente der Mehrzahl nach aussen, in eine Position ohne Eingriff in den Stapel, umfasst.

2. Vorrichtung nach Anspruch 1, **dadurch gekennzeichnet, dass** die Trennelemente der Mehrzahl derart federnd gelagert sind, dass sie radial nach innen gegen den Stapel gedrückt werden.

3. Vorrichtung nach Anspruch 1 oder 2, **dadurch gekennzeichnet, dass** die Mehrzahl mindestens drei, insbesondere mindestens vier, Trennelemente umfasst, wobei ein maximaler Winkelabstand benachbarter Trennelemente kleiner ist als 180°.

4. Vorrichtung nach einem der Ansprüche 1 bis 3, **dadurch gekennzeichnet, dass** eine Führung vorhanden ist, innerhalb derer sich der Stapel der zu vereinzelnden Objekte befinden kann.

5. Vorrichtung nach Anspruch 4, **dadurch gekennzeichnet, dass** die Mehrzahl von Trennelementen an einem Ende der Führung angeordnet ist.

6. Vorrichtung nach einem der Ansprüche 1 - 5, **dadurch gekennzeichnet, dass** der Mechanismus zum Bewegen der Trennelemente eine Hülse beinhaltet durch deren Bewegung entlang der Stapelachse die Trennelemente der Mehrzahl radial bewegt werden.

7. Vorrichtung nach einem der Ansprüche 1 - 6, **dadurch gekennzeichnet, dass** die Mehrzahl der Trennelemente quer zu einer Stapelachse, kreisförmig um den Stapel herum und radial ausgerichtet angeordnet ist.

8. Vorrichtung nach einem der Ansprüche 1 - 7, **dadurch gekennzeichnet, dass** ein vom Stapel abzuziehendes Objekt mithilfe eines, entlang der Stapelachse beweglichen, Trägers temporär fixierbar ist.

9. Vorrichtung nach Anspruch 8, **dadurch gekennzeichnet, dass** der Träger eine Saugvorrichtung umfasst zum Erzeugen eines Unterdrucks zwischen einer Wand des abzuziehenden Objekts und des Trägers.

10. Vorrichtung nach Anspruch 9, **dadurch gekennzeichnet, dass** am Träger ein flexibler Dichtungsring zum Abdichten zwischen dem Träger und dem abzuziehenden Objekt angeordnet ist.

11. Vorrichtung nach Anspruch 9 oder 10, **dadurch gekennzeichnet, dass** der Träger zwei Saugvorrichtungen umfasst, die insbesondere als koaxial angeordnete Balgsauger ausgebildet sind.

12. Verfahren zur Vereinzelung eines Stapels von Objekten, insbesondere von becherartigen Kapseln, insbesondere mit einem umlaufenden Rand, umfassend die folgenden Schritte:
a) Bereitstellen des Stapels von Objekten;
b) Positionieren das Stapels von Objekten so, dass ein endseitig liegendes Objekt des Stapels auf einer Mehrzahl von Trennelementen aufliegt;
c) Wegbewegen der Trennelemente der Mehrzahl vom Stapel durch einen Mechanismus;
d) Neupositionierung der Mehrzahl der Trennelemente relativ zum Stapel, insbesondere durch Fallen des Stapels auf einen Träger, so dass die Trennelemente, in einer dem Stapel zugewandten Position ihres Bewegungsspielraums, zwischen das endseitige Stapelobjekt und ein ihm benachbartes Objekt eingreifen können;
e) Freigeben der Trennelemente der Mehrzahl vom Mechanismus zum Wegbewegen der Trennelemente vom Stapel, wobei die Trennelemente der Mehrzahl von einer Federkraft zum Eingreifen in den Stapel gedrückt werden;
f) Wegbewegen des endseitig am Stapel liegenden Objekts vom Stapel, insbesondere durch das Fixieren und Abziehen des Objekts durch einen beweglichen Träger;
g) Wiederholung der Schritte c - f so oft, bis ein gewünschter Vereinzelungsgrad erreicht ist oder alle Objekte des Stapels vereinzelt wurden.

13. Verfahren nach Anspruch 12, **dadurch gekennzeichnet, dass** während des Schrittes d) der Stapel durch Fallen und anschliessendem Stoppen des Falls durch ein Bauteil, in Bezug auf die Trennelemente neu positioniert wird.

14. Verfahren nach Anspruch 12 oder 13, **dadurch gekennzeichnet, dass** das zu vereinzelnde Objekt des Stapels vor Schritt e) mit einem Träger in Kontakt kommt.

15. Verfahren nach einem der Ansprüche 12 - 14, **dadurch gekennzeichnet, dass** das abzutrennende Objekt durch einen, entlang der Stapelachse beweglichen, Träger temporär fixiert wird und das Objekt, während es am Träger fixiert ist, vom Stapel abgezogen wird, in dem sich der Träger innerhalb seines Bewegungsspielraums vom Stapel entfernt.

16. Verfahren nach Anspruch 12, **dadurch gekennzeichnet, dass** das vom Stapel abzutrennende Objekt durch einen Unterdruck temporär am Träger fixiert wird.
